# EUROPÄISCHE PATENTSCHRIFT

(11) **EP 2 005 004 B1**
(45) Veröffentlichungstag und Bekanntmachung des Hinweises auf die Patenterteilung: **30.09.2009**
(21) Anmeldenummer: 07724036.4
(22) Anmeldetag: 05.04.2007
(51) Int. Cl.: F04C 29/12, F04C 18/16, F16K 15/02

(54) **VERDICHTERANORDNUNG MIT EINER VENTILEINHEIT IM ANSAUGBEREICH**
COMPRESSOR ASSEMBLY COMPRISING A VALVE UNIT IN THE INTAKE REGION
SYSTÈME DE COMPRESSEUR COMPORTANT UNE UNITÉ DE SOUPAPE DANS LA ZONE D'ASPIRATION

(30) Priorität: 06.04.2006 DE 102006016317
(43) Veröffentlichungstag der Anmeldung: 24.12.2008
(73) Patentinhaber: KNORR-BREMSE Systeme für Schienenfahrzeuge GmbH, 80809 München (DE)
(72) Erfinder: KÖCK, Engelbert, 82152 Planegg (DE)
(74) Vertreter: Mattusch, Gundula
(86) Internationale Anmeldenummer: PCT/EP2007/003095
(87) Internationale Veröffentlichungsnummer: WO 2007/115789

(56) Entgegenhaltungen:
- EP-A2- 0 855 519
- WO-A-20/06096178
- WO-A-20/06096179
- DE-C2- 19 716 549
- GB-A- 1 003 295
- JP-A- 9 133 088

## Beschreibung

Die vorliegende Erfindung betrifft eine Verdichteranordnung, insbesondere ein Schraubenverdichter zur Drucklufterzeugung, umfassend ein Verdichtergehäuse, welches eine Ansaugöffnung aufweist, durch die die Verdichteranordnung das Druckmedium ansaugt, wobei eine Ventileinheit vorgesehen ist, welche ein Verschlusselement umfasst, wobei das Verschlusselement im Betrieb der Verdichteranordnung eine Offenstellung und im abgeschalteten Zustand eine Schließstellung einnimmt.

Verdichteranordnungen der hier interessierenden Art sind insbesondere Schraubenverdichter, welche zur Drucklufterzeugung verwendet werden. Ein bevorzugtes Einsatzgebiet derartiger Schraubenverdichter betrifft die Drucklufterzeugung bei Schienenfahrzeugen sowie Sonderfahrzeugen wie z. B. Gelenkbusse, um eine kontinuierliche Versorgung verschiedener Verbraucher, welche mittels Druckluft betrieben werden, sicherzustellen. Schraubenverdichter zeichnen sich dabei durch eine hohe Zuverlässigkeit, ein hohes erreichbares Druckniveau sowie durch einen kontinuierlichen Fluss des Druckmediums aus. Die Schraubenverdichter werden dabei in verschiedenen Einbaulagen in den entsprechenden Konstruktionsraum im Schienenfahrzeug integriert. Im Betrieb des Schraubenverdichters saugt dieser durch eine Ansaugöffnung die zu verdichtende Luft an, welche anschließend mittels der Schraubenrotoren verdichtet wird. Wird der Schraubenverdichter abgeschaltet, schlägt die Druckluft allerdings aus dem Verdichtergehäuse zurück in die Ansaugöffnung, wobei gewöhnlich eine Ventileinheit ein rückwärtiges Austreten der Druckluft aus der Ausgangsöffnung verhindert, indem diese beim Abschalten schließt. Erst bei erneuter Inbetriebnahme öffnet die nach Art eines Rückschlagventils funktionierende Ventileinheit, so dass die Druckluft wieder in Einströmrichtung in das Verdichtergehäuse eintreten kann.

Allgemein bekannt sind zu diesem Zwecke Ventileinheiten, welche eine Klappe umfassen, die unter der Wirkung der Schwerkraft per Gegengewicht betätigt wird. Damit ist die Einbaulage der Verdichteranordnung wesentlich für die Funktion der Ventileinheit. Die Anordnung bedingt dabei eine entsprechend große Bauhöhe, da diese häufig in der Vertikalen eingebaut werden muss. Häufig werden Ansaugregler verwendet, welche zwar in horizontaler Anordnung einbaubar sind, und die Funktion eines Ansaugrückschlagventils mit beinhalten, jedoch weisen derartige Ansaugregler häufig ein eigenes Gehäuse auf, wobei innerhalb eines zylindrischen Ansatzes in einem Schaft ein Ventilteller geführt ist, welcher zwischen der Schließstellung und der Offenstellung wechselt. Derartige Systeme benötigen häufig ein eigenes Gehäuse, und sind daher hinsichtlich ihres erforderlichen Einbauraumes sehr platzintensiv.

Aus der DE 197 16 549 C2 ist ein gattungsgemäßer Schraubenverdichter bekannt, welcher eine als Rückschlagventil ausgebildete Ventileinheit umfasst, die im Lufteintrittsstutzen angeordnet ist. Das Rückschlagventil besitzt eine Klappe, welche mittels einer Spiralfeder in eine Schließstellung gedrückt wird. Die Klappe ist einseitig in einem Gelenk drehbar gelagert, so dass diese um das Gelenk einseitig schwenkt, um von einer Schließstellung in eine Offenstellung zu gelangen. Die Spiralfeder ist dabei gehäuseinnenseitig derart angeordnet, dass diese die Klappe in die Schließstellung drückt, wobei zur Öffnung der Klappe gegen die Federkraft der Spiralfeder gedrückt werden muss, um die Klappe zu öffnen. Nachteilhafterweise ist dabei eine entsprechend hohe Kraft aufzubringen, um die Feder zu komprimieren. Die aufzubringende Kraft muss durch Strömungskräfte erzeugt werden, welche auf die Klappe wirken, wobei die Ventileinheit aufgrund dieses Nachteils einen erheblichen Strömungswiderstand darstellt, und der erreichbare Luftdruck innerhalb des Ansaügbereiches im Verdichtergehäuse sinkt. Folglich sinkt die Verdichterleistung.

Es ist daher die Aufgabe der vorliegenden Erfindung, eine Verdichteranordnung der Eingangs genannten Art zu schaffen, welche die vorstehend genannten Nachteile vermeidet und einen einfachen Aufbau aufweist, unabhängig von der Einbaulage betreibbar ist und sich durch einen geringen Platzbedarf auszeichnet.

Diese Aufgabe wird ausgehend von einer Verdichteranordnung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben. Der Oberbegriff von Anspruch 1 ist in der JP 9-133088 offenbart die als nächstcommender Stand der Technik angesehen wird.

Die Erfindung schließt die technische Lehre ein, dass das Verschlusselement tellerförmig ausgebildet ist und über im Verdichtergehäuse ausgebildete Führungskontoren zwischen der Schließstellung und der Offenstellung axial freibeweglich geführt ist.

Diese Lösung bietet den Vorteil, dass sich die Ventileinheit innerhalb des Verdichtergehäuses integrieren lässt und somit einen geringen Platzbedarf aufweist. Insbesondere zeichnet sich die vorgeschlagene Ventileinheit durch eine äußerst geringe Teileanzahl aus, welche eine einfache und mit geringem Aufwand herzustellende Ausführung ermöglicht. Insbesondere ist die vorgeschlagene Ventileinheit in jeder Einbaulage betreibbar, da das Verschlusselement über im Verdichtergehäuse ausgebildete Führungskonturen geführt ist, um zwischen einer Schließstellung und einer Offenstellung zu wechseln. Hierbei ist das Eigengewicht des Verschlusselementes unter Berücksichtigung der Richtung der Schwerkraft unerheblich, da die Offenstellung bzw. die Schließstellung jeweils über eine fluidisch-dynamische Krafteinwirkung auf das Verschlusselement eingenommen wird. Die tellerförmige Ausbildung des Verschlusselementes kann in Form eines kreisförmigen Verschlussdeckels ausgebildet sein, welcher sich als Deckel vor die Lufteinlassöffnung legt, wenn der Verdichter abgeschaltet ist und die Schließstellung eingenommen wird. Wechselt das Verschlusselement in die Offenstellung, so genügt ein Unterdruck im Verdichtergehäuse, wobei die Offenstellung aufgrund der Luftströmung beibehalten wird, welche fluidisch-dynamisch eine Kraft auf das Verschlusselement ausübt.

Ein wesentlicher Vorteil der vorliegenden Erfindung ergibt sich durch die im Verdichtergehäuse ausgebildeten Führungskonturen, welche ein Gelenk überflüssig machen, an welchem das Verschlusselement drehbar gelagert werden muss. Das Verschlusselement ist innerhalb der axial freibeweglichen Länge zwischen der Schließstellung und der Offenstellung mittels der Führungskonturen geführt, wobei die Führung über den Tellerrand des Verschlusselementes erfolgt. Die Führungskonturen sind innerhalb der Ansaugöffnung auf einer Länge ausgebildet, welche hinreichend ist, um zwischen der Schließstellung und der Offenstellung zu wechseln. Die Führungskonturen zur Führung des Verschlusselementes sind erfindungsgemäß als Gussleisten ausgeführt, wobei das Verdichtergehäuse zwischen drei und sechs, vorzugsweise zwischen drei und fünf und besonders bevorzugt vier Gussleisten umfasst. Die Gussleisten sind in Form von gefrästen Stegen ausgebildet, welche sich in Längsachse der Ansaugöffnung in der Innenwandung des Verdichtergehäuses erstrecken. Diese sind im Querschnitt wellenförmig, wobei Wellenberge radial nach innen zeigen und Wellentäler nach Außen in das Gehäuse zeigen. Dabei sind besonders bevorzugt vier Gussleisten vorgesehen, die sich in einem jeweiligen Winkel von 90° zueinander über dem kreisförmigen Querschnitt der Ansaugöffnung verteilen.

Wird nun der Verdichter eingeschaltet, so bewegt sich das Verschlusselement in die Offenstellung. Das Verschlusselement wird über die radial nach innen gerichteten Wellenberge der Gussleisten geführt, wobei die Luftströmung, welche durch die Ansaugung des Verdichters erfolgt, durch die Wellentäler der Gussleisten hindurchströmt. Die auf das Verschlusselement einwirkende Strömungskraft ist hinreichend, um dieses in der Offenstellung zu belassen. Dabei ist die Einbaulage des Verdichters und damit die der Ventileinheit für die Funktion des Ventiles unerheblich, da die jeweilige Offen- bzw. Schließstellung ausschließlich über Strömungskräfte eingenommen und aufrechterhalten wird.

Gemäß einer vorteilhaften Ausführungsform der Erfindung wird vorgeschlagen, dass an der Ansaugöffnung des Verdichtergehäuses ein Flanschelement angeordnet ist, welches eine Lufteinlassöffnung aufweist, durch die die von der Verdichteranordnung angesaugte Luft hindurchströmt. Das Flanschelement dient dabei zugleich als Verschluss der Ansaugöffnung, wobei dieses radialsymmetrisch ausgebildet ist und eine entsprechende Bohrung umfasst, durch die die Luft angesaugt werden kann. Die Lufteinlassöffnung verläuft dabei koaxial mit der Symmetrieachse des Flanschelementes, so dass dieses eher eine Ring- bzw. Rohrform aufweist, an welches außenseitig ein tellerförmiger Flansch ausgebildet ist, der an eine entsprechende bearbeitete Planfläche am Verdichtergehäuse angeschraubt ist.

Die Ventileinheit ist unmittelbar innenseitig hinter dem Flanschelement angeordnet, wobei das Flanschelement eine nach Innen gerichtete Dichtfläche aufweist, gegen welche das Verschlusselement in der Schließstellung abdichtet. Diese ist als ringförmige Fläche ausgebildet, wobei der ringförmige Abschnitt etwa dem Außendurchmesser des Verschlusselementes entspricht. In der Schließstellung befindet sich zwischen der Dichtfläche des Flanschelementes und dem Verschlusselement ein Dichtelement, wobei das Dichtelement in der Schließstellung den Ansaugbereich des Verdichtergehäuses gegen die Atmosphäre abdichtet. Ein weiteres Dichtelement ist zwischen dem Flanschelement und dem Verdichtergehäuse angeordnet, um auch an dieser Stelle eine entsprechende Dichtheit des Ansaugbereiches zu gewährleisten. Die Dichtungen können jeweils als O-Ring-Dichtungen ausgebildet sein, wobei das Dichtelement, welches zwischen dem Verschlusselement und dem Flanschelement dichtet, im Verschlusselement aufgenommen ist. Hingegen ist die Dichtung, welche zwischen dem Flanschelement und dem Verdichtergehäuse dichtet, im Flanschelement aufgenommen, jedoch besteht auch die Möglichkeit der jeweils andersseitigen Aufnahme der Dichtelemente. Bei geeigneter Werkstoffwahl wie z.B. Kunststoffen wäre auch die Erzielung der gewünschten Dichtwirkung über geeignete geometrische Ausformungen möglich.

Erfindungsgemäß umfasst die Ventileinheit ein Hubbegrenzungselement, wobei die axiale Bewegung des Verschlusselementes in die Offenstellung mittels des Hubbegrenzungselementes begrenzbar ist. Dabei kann das Hubbegrenzungselement selbst an einer entsprechenden Stelle innerhalb der Ansaugöffnung axial fixiert werden, um die Position der Offenstellung des Verschlusselementes zu justieren. Dabei kann das Hubbegrenzungselement eine entsprechend angepasste Entfernung vom Flanschelement aufweisen, so dass das Verschlusselement eine Offenstellung einnimmt, welche einen minimalen Strömungswiderstand für die angesaugte Verdichterluft ergibt. Das Hubbegrenzungselement ist ebenfalls tellerförmig ausgebildet, wobei sich mittig ein zylinderförmiger Abschnitt in Richtung des Flanschelementes erstreckt, an welches der Ventilteller in der Offenstellung angrenzt. Zwischen dem Verschlusselement und dem Hubbegrenzungselement ist dabei erfindungsgemäß eine Feder angeordnet, welche das Verschlusselement im abgeschalteten Zustand der Verdichteranordnung gegen die Dichtfläche des Flanschelementes drückt. Dabei weist die Feder eine geringe Steifigkeit auf, die lediglich eine kleine Kraft auf das Verschlusselement ausübt. Der Einsatz der Feder dient insbesondere der Vermeidung von Klappergeräuschen im abgeschalteten und entlasteten Zustand, da das Verschlusselement axial frei beweglich ist und ohne die Feder keine Krafteinwirkung erfahren würde, um beispielsweise in der Schließstellung zu verbleiben. Die Federkraft ist dabei so niedrig gewählt, dass für den Übergang von der Schließstellung in die Offenstellung keine wesentliche Kraft erforderlich ist, so dass kein bzw. nur ein minimaler Strömungswiderstand aufgrund eines verengten Strömungsquerschnittes zwischen dem Verschlusselement und dem Flanschelement entsteht. Daher kann die Feder aus der Ventileinheit auch entfallen. Hinsichtlich der Position des Verschlusselementes in der Schließstellung kann die Feder zwar unterstützend wirken, jedoch ist aufgrund der rückwärtigen Strömungsbeaufschlagung bei einem Innendruck in der Ansaugöffnung ein selbsttätiges Verschließen des Verschlusselementes und ein Abdichten gegen die Dichtfläche des Flanschelementes möglich. Die Feder ist dabei als Spiralfeder ausgebildet, wobei diese ebenfalls als Tellerfeder oder ähnliches ausgebildet sein kann, welche vorzugsweise als Druckfeder wirkt.

Eine weitere vorteilhafte Ausführungsform der Erfindung sieht vor, dass das Flanschelement einen hohlzylinderförmigen Abschnitt aufweist, welcher in Richtung der Außenseite des Verdichtergehäuses ausgebildet ist. Außenseitig auf dem hohlzylinderförmigen Abschnitt kann eine Filteraufnahme aufgeschoben werden, welche mittels eines Klemmelementes wie einer Rohrschelle, einem Spannelement aus einem Kunststoffmaterial oder ähnlichem befestigt ist. Dabei wird dem Flanschelement die weitere Funktion zugeteilt, sowohl die Ansaugöffnung außenseitig vom Verdichtergehäuse zu verschließen, innenseitig eine Dichtfläche gegenüber dem Verschlusselement zu bieten und zugleich eine Aufnahmemöglichkeit für eine Filteraufnahme zu schaffen. Die Filteraufnahme kann als spritzgegossenes Bauteil aus einem Kunststoffmaterial ausgeführt sein, welche eine Außenkontur bietet, die weiterhin die Befestigung eines Filtergehäuses und /oder eines Luftfilters ermöglicht. Das Filtergehäuse umschließt dabei den Luftfilter, welcher durch diese Anordnung geschützt ist. Die von der Verdichteranordnung durch die Ansaugöffnung angesaugte Luft strömt dabei durch die entsprechenden Öffnungen im Filtergehäuse durch den Filter, anschließend durch die Filteraufnahme und gelangt in die Lufteinlassöffnung im Flanschelement. Wird der Verdichter nun abgeschaltet, so verschließt das Verschlusselement innenseitig gegen das Flanschelement, so dass die Lufteinlassöffnung, die Filteraufnahme sowie der Filter als auch das Filtergehäuse Atmosphärendruck annehmen.

Eine alternative Ausführungsform der Ventileinheit der Verdichteranordnung sieht vor, dass die Ventileinheit in einem separaten Gehäuse angeordnet ist, wobei das separate Gehäuse am Verdichtergehäuse montierbar ist. Diese Ausführungsform unterscheidet sich lediglich durch eine außenseitige Anordnung der Ventileinheit, welche jedoch nicht die Vorteile der erfindungsgemäßen Lösung der Ausbildung der Ventileinheit mittels eines axial beweglichen Verschlusselementes verliert.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Figur 1: einen Querschnitt eines Ansaugbereiches einer Verdichteranordnung mit einer Ventileinheit, wobei die Ventileinheit eine Schließstellung einnimmt; und
- Figur 2: einen Querschnitt eines Ansaugbereiches einer Verdichteranordnung mit einer Ventileinheit, wobei die Ventileinheit eine Offenstellung einnimmt.

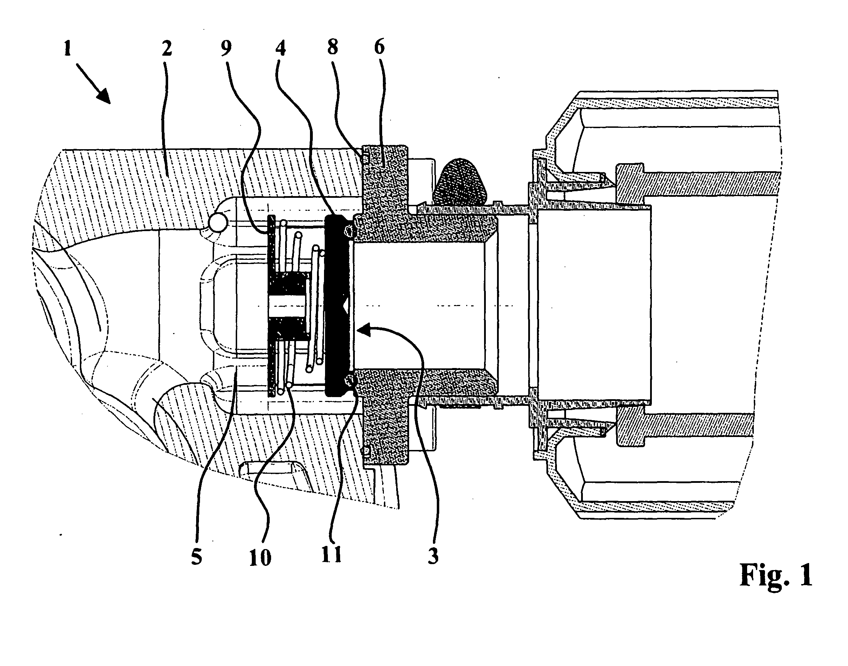

In Figur 1 ist eine Verdichteranordnung 1 in einem Querschnitt dargestellt, wobei der dargestellte Bereich insbesondere der Ansaugöffnung der Verdichteranordnung 1 entspricht. Der Verdichter saugt im Betrieb durch die Ansaugöffnung Luft an, welche anschließend verdichtet wird, um diese nachfolgend den jeweiligen Verbrauchern zuzuführen. Die Verdichteranordnung 1 umfasst ein Verdichtergehäuse 2, welches im Übergang zur Außenseite die Ansaugöffnung aufweist, welche eine Längsabschnitt umfasst. Innerhalb dieses Längsabschnittes ist eine Ventileinheit 3 angeordnet, welche im Betrieb der Verdichteranordnung 1 das Einströmen der zu verdichtenden Luft freigibt, wohingegen im abgeschalteten Zustand der Verdichteranordnung 1 die Ansaugöffnung durch eine Schließstellung der Ventileinheit 3 gegenüber der Außenseite abgedichtet wird.

Die Ventileinheit 3 umfasst ein Verschlusselement 4, wobei dieses in Figur 1 in einer Schließstellung gezeigt ist. Das Verschlusselement 4 ist tellerförmig ausgeführt, und führt eine Axialbewegung innerhalb der Ansaugöffnung des Verdichtergehäuses 2 aus.

Zur Führung des Verschlusselementes 4 sind in der Ansaugöffnung innerhalb des Längsabschnittes Führungskonturen 5 eingearbeitet, welche das Verschlusselement 4 um den äußeren Rand zentrieren und axial führen. Das Verschlusselement 4 dichtet in der dargestellten Schließstellung gegen eine Dichtfläche, welche an einem Flanschelement 6 ausgebildet ist. Im Verschlusselement 4 ist ein Dichtelement 11 aufgenommen, welches zwischen der Dichtfläche im Flanschelement 6 und dem Verschlusselement 4 selbst abdichtet. Das Flanschelement 6 ist mittels eines Dichtelementes 8 gegen das Gehäuse 2 abgedichtet. Die Dichtungen 8, 11 sind dabei als O-Ring- Dichtungen ausgeführt.

Das Flanschelement 6 schließt den äußeren Bereich der Ansaugöffnung im Verdichtergehäuse 2 ab, so dass sich die Ventileinheit 3 innenseitig hinter dem Flanschelement 6 befindet und somit außenseitig geschützt ist. Die Führungskonturen 5 im Ansaugbereich des Verdichtergehäuses 2 sind als längs ausgebildete Gussleisten ausgeführt, wobei die Fertigung nach dem Gussvorgang eine spanende Nachbearbeitung umfassen kann. Dabei kann beispielsweise ein Fräsvorgang eine erforderliche Maßgenauigkeit zur Führung herstellen, wobei gleichfalls eine geforderte Oberflächequalität erzielbar ist. Die Gussleisten weisen sich abwechselnd Wellenberge und Wellentäler auf, wobei das Verschlusselement 4 mit den Wellenbergen in Berührung steht. Die Länge der Gussleisten erstreckt sich zumindest über die gesamte Hubbewegung des Verschlusselementes 4, so dass dieses über der gesamten Bewegungsstrecke geführt ist. Die Offenstellung des Verschlusselementes 4 wird durch ein Hubbegrenzungselement 9 begrenzt, welches gemäß dem vorliegenden Ausführungsbeispiel eine flanschförmige Ausbildung aufweist, welche einen Tellerabschnitt sowie einen zylindrischen Abschnitt umfasst, wobei der zylindrische Abschnitt in Richtung des Verschlusselementes 4 ausgebildet ist. Das Begrenzungselement 9 ist ebenfalls innerhalb der Gussleisten in der Ansaugöffnung des Verdichtergehäuses 2 untergebracht, und begrenzt den Hub des Verschlusselementes 4 in der Offenstellung. Zwischen dem Verschlusselement 4 und dem Hubbegrenzungselement 9 ist eine Feder 10 vorgesehen, welche verhindert, dass das Verschlusselement 4 in der Figur 1 dargestellten Schließstellung frei beweglich ist, um ein Klappern zu vermeiden. Die Feder 10 ist als Spiralfeder ausgeführt und wirkt als Druckfeder zwischen dem Hubbegrenzungselement 9 und dem Verschlusselement 4.

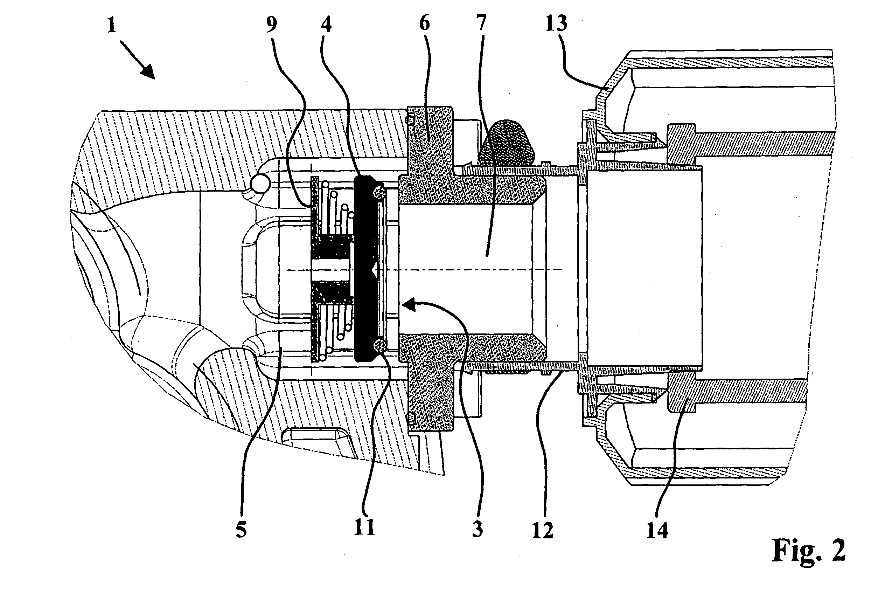

In Figur 2 ist die Verdichteranordnung 1 ebenfalls im Bereich der Ansaugöffnung dargestellt, wobei die Ventileinheit 3 in der Offenstellung gezeigt ist. Die angesaugte Luft strömt nunmehr durch die Lufteinlassöffnung 7, welche sich als zylindrische Bohrung durch das Flanschelement 6 erstreckt und anschließend zwischen dem Verschlusselement 4 und dem Flanschelement 6 hindurch. Die als Gussleisten ausgebildeten Führungskonturen 5 bieten der angesaugten Verdichterluft nunmehr die Möglichkeit, dass diese im Bereich der Wellentäler am Verschlusselement 4 vorbeiströmen kann. Die Wellentäler bilden dabei Umströmkanäle, wobei gemäß dem vorliegenden Ausführungsbeispiel insgesamt vier Gussleisten über den Umfang innerhalb der Ansaugöffnung im Ansaugbereich des Verdichtergehäuses eingearbeitet sind. Aufgrund der Strömungskräfte, welche auf das Verschlusselement 4 einwirken, öffnet sich dieses, in dem es sich von der Dichtfläche am Flanschelement 6 abhebt. Somit entsteht ein Strömungsspalt zwischen einem Dichtelement 11, welches im Verschlusselement 4 eingebracht ist, und der Dichtfläche des Flanschelementes 6. Die Feder 10 wird in dieser Stellung komprimiert, wobei die Federkraft so gering ausgeführt ist, dass keine wesentliche Kraft auf das Verschlusselement 4 ausgeübt werden muss, um dieses in die Offenstellung zu bewegen.

Das Flanschelement 6 weist einen hohlzylinderförmigen Abschnitt auf, welcher sich in Richtung der Außenseiten des Verdichtergehäuses 2 erstreckt. Auf dem zylinderförmigen Abschnitt ist eine Filteraufnahme 12 angeordnet, welche ein Filtergehäuse 13 sowie einen Luftfilter 14 aufnimmt. Die angesaugte Verdichterluft strömt durch entsprechende - hier nicht dargestellte - Öffnungen im Filtergehäuse 13 ein, und passiert den Luftfilter 14. Anschließend tritt die Verdichterluft in die Filteraufnahme 12 und nachfolgend in die Lufteinlassöffnung 7 ein, um die Ventileinheit 3 zu passieren.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. So ist die Erfindung insbesondere nicht beschränkt auf eine Verwendung im Zusammenhang mit Schraubenverdichtern.

### Bezugszeichenliste

- 1: Verdichteranordnung
- 2: Verdichtergehäuse
- 3: Ventileinheit
- 4: Verschlusselement
- 5: Führungskontur
- 6: Flanschelement
- 7: Lufteinlassöffnung
- 8: Dichtelement
- 9: Hubbegrenzungselement
- 10: Feder
- 11: Dichtelement
- 12: Filteraufnahme
- 13: Filtergehäuse
- 14: Luftfilter

## Patentansprüche

1. Verdichteranordnung (1), insbesondere ein Schraubenverdichter zur Drucklufterzeugung, umfassend ein Verdichtergehäuse (2), welches eine Ansaugöffnung zum Ansaugen von Luft aufweist, wobei eine Ventileinheit (3) mit einem Verschlusselement (4) vorgesehen ist, das im Betrieb eine Offenstellung und im abgeschalteten Zustand eine Schließstellung einnimmt, wobei das Verschlusselement (4) tellerförmig ausgebildet ist und über im Verdichtergehäuse (2) ausgebildete Führungskonturen (5) zwischen der Schließstellung und der Offenstellung axial frei beweglich geführt ist,
**dadurch gekennzeichnet, dass** die Führungskonturen (5) zur Führung des Verschlusselementes (4) als Gussleisten ausgebildet sind, wobei das Verdichtergehäuse (2) zwischen 3 und 6 Gussleisten umfasst, und dass die axiale Bewegung des Verschlusselementes (4) in die Offenstellung mittels des Hubbegrenzungselementes (9) begrenzbar ist, wobei zwischen dem Verschlusselement (4) und dem Hubbegrenzungselement (9) eine Feder (10) zur Erzeugung einer Rückstellkraft angeordnet ist.

2. Verdichteranordnung (1) nach Anspruch 1,
**dadurch gekennzeichnet, dass** an der Ansaugöffnung des Verdichtergehäuses (2) ein Flanschelement (6) angeordnet ist, welches eine Lufteinlassöffnung (7) aufweist, durch die die von der Verdichteranordnung (1) angesaugte Luft hindurchströmt.

3. Verdichteranordnung (1) nach Anspruch 2,
**dadurch gekennzeichnet, dass** das Flanschelement (6) radialsymmetrisch ausgebildet ist, und die Lufteinlassöffnung (7) im Flanschelement (6) koaxial mit der Symmetrieachse des Flanschelementes (6) verläuft.

4. Verdichteranordnung (1) nach Anspruch 2 und 3,
**dadurch gekennzeichnet, dass** das Flanschelement (6) eine nach innen gerichtete Dichtfläche aufweist, gegen welche das Verschlusselement (4) in der Schließstellung abdichtet.

5. Verdichteranordnung (1) nach Anspruch 2 und 4,
**dadurch gekennzeichnet, dass** das Flanschelement (6) ein Dichtelement (8) umfasst, wobei das Dichtelement (8) zwischen dem Flanschelement (6) und dem Verdichtergehäuse (2) angeordnet ist.

6. Verdichteranordnung (1) nach Anspruch 1,
**dadurch gekennzeichnet, dass** die Feder (10) als Spiralfeder ausgebildet ist, welche im abgeschalteten Zustand der Verdichteranordnung (1) das Verschlusselement (4) in die Schließstellung drückt.

7. Verdichteranordnung (1) nach einem der vorgenannten Ansprüche,
**dadurch gekennzeichnet, dass** das Verschlusselement (4) ein Dichtelement (11) umfasst, wobei dieses den Ansaugbereich bei flächigem Anliegen des Verschlusselementes (4) an der Dichtfläche des Flanschelementes (6) abdichtet.

8. Verdichteranordnung (1) nach einem der vorgenannten Ansprüche,
**dadurch gekennzeichnet, dass** das Flanschelement (6) einen hohlzylinderförmigen Abschnitt aufweist, welcher in Richtung der Außenseite des Verdichtergehäuses (2) ausgebildet ist.

9. Verdichteranordnung (1) nach Anspruch 8,
**dadurch gekennzeichnet, dass** außenseitig auf dem hohlzylinderförmigen Abschnitt eine Filteraufnahme (12) angeordnet ist.

10. Verdichteranordnung (1) nach Anspruch 9,
**dadurch gekennzeichnet, dass** die Filteraufnahme (12) ein Filtergehäuse (13) und /oder einen Luftfilter (14) aufnimmt.

11. Verdichteranordnung (1) nach einem der vorgenannten Ansprüche,
**dadurch gekennzeichnet, dass** die Ventileinheit (3) innenliegend im Verdichtergehäuse (2) angrenzend an das Flanschelement (6) angeordnet ist

12. Verdichteranordnung (1) nach Anspruch 1 bis 10,
**dadurch gekennzeichnet, dass** die Ventileinheit (3) in einem separaten Gehäuse angeordnet ist, wobei das separate Gehäuse am Verdichtergehäuse (2) montierbar ist.

## Claims

1. A compressor assembly (1), in particular a screw compressor for compressed air generation, comprising a compressor housing (2) which has an intake port for sucking in air, a valve unit (3) being provided, with a closing element (4) which assumes an open position during operation and a closing position in the switched-off state, the closing element (4) being of plate-shaped design and being freely movably axially between the closing position and the open position via guide contours (5) formed in the compressor housing (2), **characterized in that** the guide contours (5) for guiding the closing element (4) are designed as cast strips, the compressor housing (2) comprising between 3 and 6 cast strips, and **in that** the axial movement of the closing element (4) into the open position can be limited by means of the stroke limitation element (9), a spring (10) for generating a return force being arranged between the closing element (4) and the stroke limitation element (9).

2. The compressor assembly (1) as claimed in claim 1, **characterized in that** a flange element (6) is arranged at the intake port of the compressor housing (2) and has an air inlet port (7) through which flows the air sucked in by the compressor assembly (1).

3. The compressor assembly (1) as claimed in claim 2, **characterized in that** the flange element (6) is of radially symmetrical design, and the air inlet port (7) in the flange element (6) runs coaxially with the axis of symmetry of the flange element (6).

4. The compressor assembly (1) as claimed in claims 2 and 3, **characterized in that** the flange element (6) has an inwardly directed sealing face, against which the closing element (4) seals off in the closing position.

5. The compressor assembly (1) as claimed in claims 2 and 4, **characterized in that** the flange element (6) comprises a sealing element (8), the sealing element (8) being arranged between the flange element (6) and the compressor housing (2).

6. The compressor assembly (1) as claimed in claim 1, **characterized in that** the spring (10) is designed as a helical spring which presses the closing element (4) into the closing position in the switched-off state of the compressor assembly (1).

7. The compressor assembly (1) as claimed in one of the abovementioned claims, **characterized in that** the closing element (4) comprises a sealing element (11), the latter sealing off the intake region when the closing element (4) comes to bear over its area against the sealing face of the flange element (6).

8. The compressor assembly (1) as claimed in one of the abovementioned claims, **characterized in that** the flange element (6) has a hollow-cylindrical portion which is formed in the direction of the outside of the compressor housing (2).

9. The compressor assembly (1) as claimed in claim 8, **characterized in that** a filter receptacle (12) is arranged on the hollow-cylindrical portion on the outside.

10. The compressor assembly (1) as claimed in claim 9, **characterized in that** the filter receptacle (12) receives a filter housing (13) and/or an air filter (14).

11. The compressor assembly (1) as claimed in one of the abovementioned claims, **characterized in that** the valve unit (3) is arranged internally in the compressor housing (2) adjacently to the flange element (6).

12. The compressor assembly (1) as claimed in claims 1 to 10, **characterized in that** the valve unit (3) is arranged in a separate housing, the separate housing being mountable on the compressor housing (2).

## Revendications

1. Système (1) formant compresseur, notamment compresseur à vis pour la production d'air comprimé, comportant un corps (2) de compresseur, qui comporte une ouverture d'aspiration pour aspirer de l'air, une unité (3) de soupape comportant un élément (4) de fermeture étant prévue, l'élément (4) prenant en fonctionnement une position ouverte et à l'état arrêté une position fermée, l'élément (4) de fermeture étant réalisé sous une forme d'un disque et pouvant être guidé par l'intermédiaire de contours (5) de guidage qui sont formés dans le corps (2) de compresseur en déplacement libre axialement entre la position de fermeture et la position d'ouverture,
**caractérisé en ce que** les contours (5) de guidage pour guider l'élément (4) de fermeture sont réalisés sous la forme de barrettes coulées, le corps (2) de compresseur comportant entre 3 et 6 barrettes coulées et **en ce que** le déplacement axial de l'élément (4) de fermeture vers la position ouverte peut être limité au moyen de l'élément de limitation de la course, et il est disposé entre l'élément (4) de fermeture et l'élément (9) de limitation de la course un ressort (10) pour la production d'une force de rappel.

2. Système (1) formant compresseur suivant la revendication 1,
**caractérisé en ce qu'**il est disposé au niveau de l'ouverture d'aspiration du corps (2) de compresseur un élément (6) formant bride, qui comporte une ouverture (7) d'entrée d'air, par laquelle l'air aspiré par le système (1) formant compresseur peut s'écouler.

3. Système (1) formant compresseur suivant la revendication 2,
**caractérisé en ce que** l'élément (6) formant bride est réalisé symétrique radialement, et l'ouverture (7) d'entrée d'air s'étend dans l'élément (6) formant bride coaxialement par rapport à l'axe de symétrie de l'élément (6) formant bride.

4. Système (1) formant compresseur suivant les revendications 2 et 3,
**caractérisé en ce que** l'élément (6) formant bride comporte une surface d'étanchéité orientée vers l'intérieur, contre laquelle l'élément (4) de fermeture vient porter de manière étanche dans la position de fermeture.

5. Système (1) formant compresseur suivant les revendications 2 et 4,
**caractérisé en ce que** l'élément (6) formant bride comporte un élément (8) d'étanchéité, l'élément (8) d'étanchéité étant disposé entre l'élément (6) formant bride et le corps (2) de compresseur.

6. Système (1) formant compresseur suivant la revendication 1,
**caractérisé en ce que** le ressort (10) est formé en ressort spiral, et il repousse l'élément (4) de fermeture dans la position de fermeture à l'état hors service du système (1) formant compresseur.

7. Système (1) formant compresseur suivant l'une des revendications précédentes,
**caractérisé en ce que** l'élément (4) de fermeture comporte un élément (11) d'étanchéité, cet élément d'étanchéité rendant étanche la zone d'aspiration par application à plat de l'élément (4) de fermeture sur la surface d'étanchéité de l'élément (6) formant bride.

8. Système (1) formant compresseur suivant l'une des revendications précédentes,
**caractérisé en ce que** l'élément (6) formant bride comporte une partie en forme de cylindre creux, qui est formée dans la direction du côté extérieur du corps (2) de compresseur.

9. Système (1) formant compresseur suivant la revendication 1,
**caractérisé en ce qu'**un logement (12) de filtre est disposé du côté extérieur sur la partie en forme de cylindre creux.

10. Système (1) formant compresseur suivant la revendication 9,
**caractérisé en ce que** le logement (12) de filtre reçoit un corps (13) de filtre et/ou un filtre (14) à air.

11. Système (1) formant compresseur suivant l'une des revendications précédentes,
**caractérisé en ce que** l'unité (3) de soupape est disposée reposant à l'intérieur dans le corps (2) de compresseur en étant voisine de l'élément (6) formant bride.

12. Système (1) formant compresseur suivant l'une des revendications 1 à 10,
**caractérisé en ce que** l'unité (3) de soupape est disposée dans un boîtier distinct, le boîtier distinct pouvant être monté sur le corps (2) de compresseur.
